Europäisches Patentamt

European Patent Office

Office européen des brevets

(19)

(11) Publication number: **0 096 471**
**A1**

(12)                **EUROPEAN PATENT APPLICATION**

(21) Application number: **83302648.7**

(22) Date of filing: **11.05.83**

(51) Int. Cl.³: **F 16 D 13/68**

(30) Priority: **28.05.82 GB 8215790**

(43) Date of publication of application:
**21.12.83 Bulletin 83/51**

(84) Designated Contracting States:
**BE DE FR GB IT SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Young, Alastair John**
**39 Roundshill**
**Kenilworth Warwickshire(GB)**

(72) Inventor: **Burke, John Pius**
**27 Acacia Road**
**Leamington Spa Warwickshire(GB)**

(74) Representative: **Cundy, Anthony Brian**
**Anthony Cundy & Company 384 Station Road Dorridge**
**Solihull West Midlands B93 8ES(GB)**

(54) Friction clutch driven plate.

(57) A friction clutch driven plate has a hub 11 with a flange 13. A friction facing carrier 19, 20 is mounted on the hub for limited angluar deflection controlled by resilient buffers. Each buffer comprises a resilient element 21 between two end caps 27 mounted within apertures 22 and 23 in the carrier and flange. Variation of the thickness of an end plate where it engages the hub or friction facing carrier varies the torque/deflection characteristic of the driven plate, particulary the range of free deflection until the buffer becomes effective.

EP 0 096 471 A1

./...

FIG 1

## Friction Clutch Driven Plate

This invention relates to friction clutch driven plates for, but not exclusively for use in automobile friction clutches.

A known friction clutch driven plate comprises a hub with a flange thereon, a friction facing carrier mounted on the hub and capable of limited rotational deflection about the hub, and resilient members located in apertures in the flange and carrier to resist said rotation, said members each having end caps located one at each end thereof and being held snugly in the apertures in one of the flange and carrier and having some resilient members having play circumferentially of the driven plate, in their respective apertures in the other of the flange and carrier.

The torque/deflection characteristic between the hub and the friction facing carrier is controlled by the spring rate of the resilient members and the circumferential clearance of some resilient members in their apertures. For use in a range of variations of a single basic model of vehicle, or for use of the same engine-gearbox combination in different models of vehicle, it is often desired to provide the same basic design of clutch and driven plate but to vary the torque/deflection characteristic from one model to another. Spring rates can be varied by alteration of resilient members but to vary the deflection at which particular resilient members become effective normally requires variation of one or more apertures and thus of the hub flange or carrier. These are major components so provision of variations in these components between driven plates leads to substantial costs.

The present invention seeks to provide an alternative means whereby the torque/deflection characteristic can be altered from one driven plate to another.

According to one aspect of the present invention there is provided a range of friction clutch driven plates, each driven plate of the range having a hub with a flange thereon, a friction facing carrier mounted on the hub and capable of angular deflection with respect to the hub about the hub axis and resilient buffers located in apertures in the flange and carrier to control said deflection and thereby provide a controlled torque/delection characteristic between the hub and carrier, each buffer comprising a resilient element and two end caps, the dimensions and relative positions of the apertures being identical from one clutch to another, wherein the torque/deflection characteristic is varied from one clutch to another in the range by provision of at least one buffer in each clutch which has an end cap which differs from the corresponding end cap in another clutch of the range.

Preferably at least one buffer in one clutch has a resilient element which differs from the corresponding resilient element in another clutch. The length (circumferentially of the driven plate) of an end cap in one clutch may differ from the length of a corresponding end cap in another clutch such that the corresponding buffers come into action after different ranges of angular deflection. One buffer in one driven plate may come into play immediately upon any deflection and the corresponding buffer in another driven plate may come into play after a discrete range of movement.

The invention also extends to a friction clutch driven plate having a hub with a flange thereon, a friction facing carrier mounted on the hub and capable of angular deflection about the hub, and resilient elements located in apertures in the flange and carrier to resist said deflection, said elements each having end caps, one at each end thereof and being held snugly in the apertures in one of the flange and carrier and at least two of said elements having circumferential play in the apertures in the other of the flange and carrier, wherein end caps have different thicknesses whereby the operating characteristics of resilient elements within apertures vary from one to another due to different thickness end caps to vary the circumferential play in a respective aperture.

According to a further aspect of the invention there is provided a method of altering the torque/deflection characteristic of a friction clutch driven plate having a hub with a flange thereon, a friction facing carrier mounted on the hub and capable of rotational deflection about the hub, and resilient elements located in apertures in the flange and carrier to resist said rotation, said members each having end caps located one at each end thereof and being held snugly in the apertures of one of the flange and carrier, and at least two of said elements having circumferential play in their respective apertures in the other of the flange and carrier, said method comprising the varying of the said circumferential play by the use of end caps of differing circumferential lengths.

The invention will now be described by way of example and with reference to the accompanying drawings in which:-

Figure 1 is an elevation of a driven plate according to this invention with the retainer plate removed and showing two sets of end caps in section, and two sets of end caps in elevation;

Figure 2 is a section on the line II-II of figure 1, but with the retainer plate in position;

Figure 3 is a section on the line III-III of figure 1, but with the retainer plate in position;

Figure 4 is a graph showing the torque/deflection characteristic for the herein disclosed driven plates;

Figure 5 is an elevation of a second driven plate with the retainer plate removed;

and

Figure 6 is a section on the line VI-VI of figure 5 with the retainer plate in position.

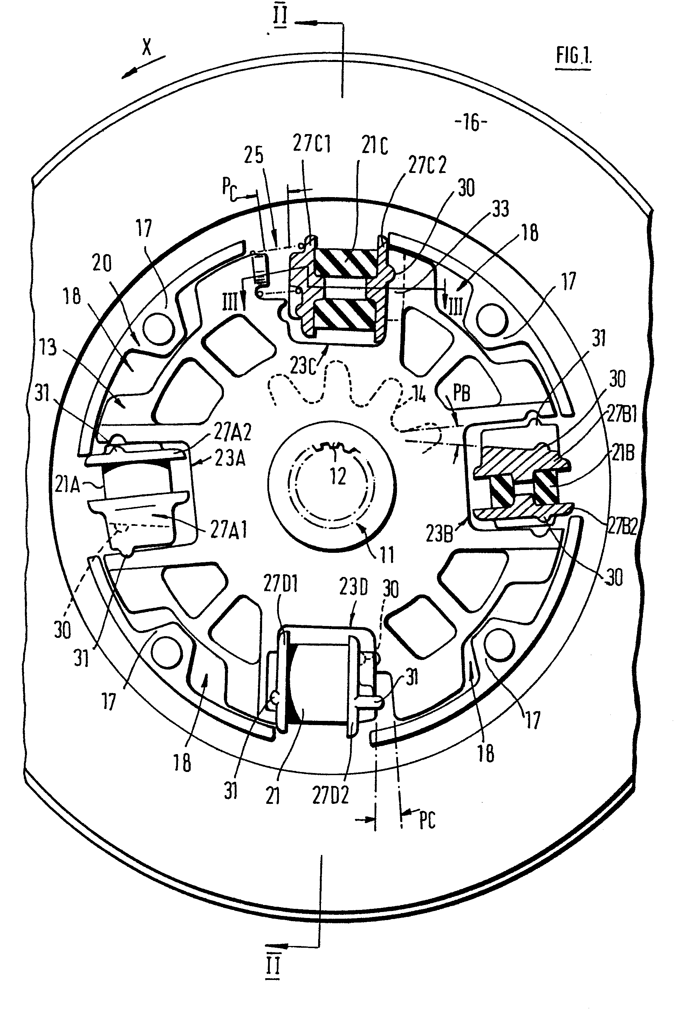

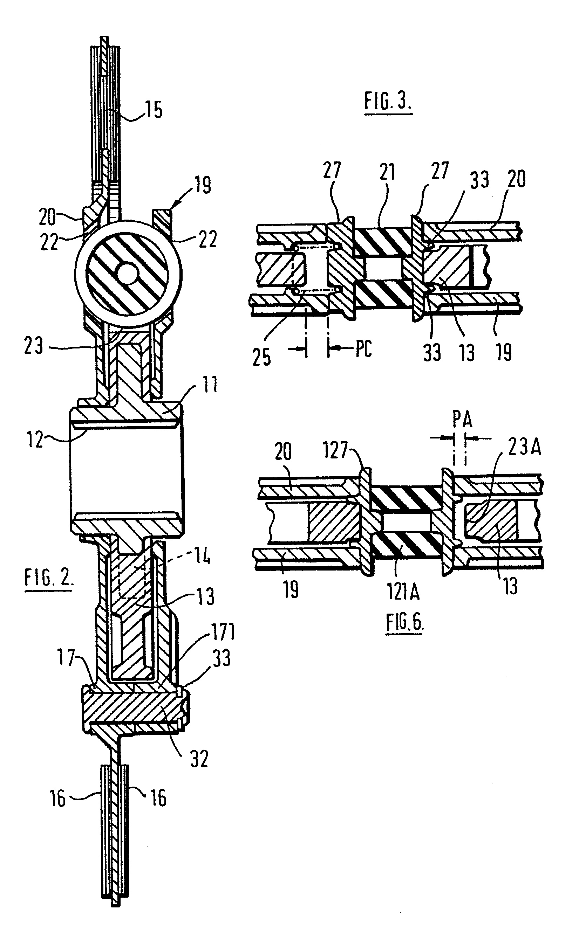

With reference to figures 1 to 3, a friction clutch driven plate for an automobile clutch comprises a steel hub 11 having internal splines 12 for mating with the input shaft of a gearbox. The hub 11 has a glass-filled nylon 66 annular flange 13 moulded thereon. The flange 13 is secured in position by projections 14 on the external surface of the hub 11.

A friction facing 15 having a pair of opposed surfaces 16 is moulded directly onto a reinforced polyether sulphone (P.E.S.) adaptor plate 20.

The adaptor plate 20 is injection moulded and its reinforcement is glass fibre, carbon fibre or a combination of both. The adaptor plate 20 is co-axial with the axis of hub 11 and is rotatably mounted on the hub 11 on one side of the flange 13. There are four circumferentially spaced axial projections 17 on the plate

0096471

20 which pass through apertures 18 in the outer peripheral margin of the hub flange 13. A co-axial annular retainer plate 19 is located on the opposite side of the flange 13 from the adaptor plate 20. The projections 17 abut like projections 171 on the retainer plate 19 and the two plates are secured together by rivets 32 which pass through the projections. The rivets 32 are rivetted over washers 33 to prevent damage to the retainer plate 19. The retainer plate 19 is moulded from reinforced P.E.S. The adaptor and retainer plates 20 and 19 form a friction facing carrier that is capable of limited angular rotation, that is angular deflection relative to the hub 11, the deflection being limited by abutment of the projections 17 with the radial ends of the cooperating apertures 18.

Four elastomeric resilient elements 21 are each located in a set of aligned apertures 22 and 23 in the retainer and adaptor plates 19 and 20 and hub flange 13 respectively. The elastomeric elements 21 are hollow rubber cylinders, preferably styrene butadiene rubber, with an internal diameter which locates them on projections of the end caps.

Each of the elastomeric elements 21 is supported by a pair of end caps 27 located one at each end of said elastomeric elements. Each end cap 27 has axial bosses 30 and 31 on its back surface (surface away from the resilient element) that locate in notches in the flange 13 and facing carrier respectively to hold the end cap against radial movement. Each end cap 27 also has a pair of radial flanges 33, see for example cap 27C1, that locates the cap against axial movement. Each elastomeric element together with its two end caps constitutes a resilient buffer.

The four buffers have differing amounts of circumferential play in the hub flange apertures 23. Two of the hub flange windows 23A and 23B are identical with each other and the other windows 23C and 23D are of the same circumferential length as each other but the aperture 23C is adapted to receive an auxiliary spring 25. These two apertures 23C and D differ in length from the other two apertures 23A and B.

The elastomeric elements are held in position in the spring apertures 22 in the adaptor and retainer plates 20 and 19, by the end caps 27 and the degree of circumferential play, before the hub flange 13 engages an end cap and begins to compress a resilient member 21, is determined by the free play between the radial end of a respective spring aperture and its adjacent end cap 27. For example with the hub flange held stationary and the friction facing and carrier deflected anti-clockwise in the direction of arrow X under a drive load then the play at end caps 27A1 and 27B1 at the leading ends of the buffers in hub apertures 23A and 23B is the dimension PB, and in apertures 23C and 23D is PC, before the respective buffers come into contact with the radial ends of the respective spring apertures in the hub. The play PB is arranged to be greater than the play PC. This amount of free circumferential play before a respective buffer begins to operate is determined by the circumferential thickness of the respective end caps of the buffer.

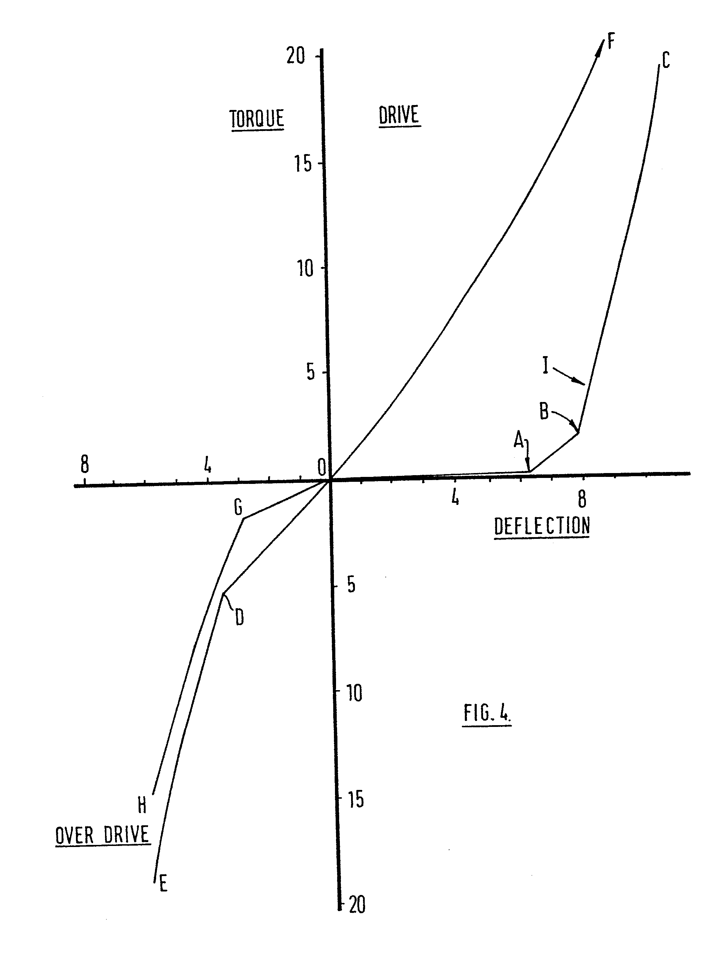

Further details of the operation of the driven plate of figures 1 to 3 will be explained with reference to figure 4 which shows the torque/deflection characteristic of the driven plate as curve E D O A B C. The ways in which the sections of the characteristic occur will be described individually.

O to A.    When the friction facing carrier
operates in the drive mode the facing carrier is deflected
anti-clockwise in the direction of arrow X; the only
initial resistance to rotation is provided by the
auxiliary spring 25.  The light spring loading is represented by the shallow slope between points O and A.
The carrier plates 20 and 19 move to take up the
clearance PC at end caps  27A1 and 27B1 and at point A
all this clearance has been taken up.

A to B.    Further anti-clockwise deflection
results in the resilient elements 21C and 21D resisting
the deflection until the clearance PB has been taken up
at point B.  There is also an increasing load on auxiliary
spring 25 but this is now so small as to be negligible.

B to C.    Further deflection is resisted by all
the resilient elements 21.  This continues until further
clockwise deflection is prevented by the projections 17
abutting the ends of the apertures 18 at point C.

C to O.    If the friction facings are rotated
clockwise from point C the reverse operation takes place
until point O is reached when all load is released.

O to D.    When the driven plate goes into the
overdirve mode, there is no initial clearance at the now
leading ends of the resilient elements 21C and 21D, so
these two resilient elements come into operation immediately and this continues until the clearances at the end
caps 27A2 of the resilient element 21A and 21B have been
taken up at D.

D to E.    Thereafter all four buffers resist
deflection which continues until the projections 17 abut
the ends of their respective apertures at point E.

The load/deflection characteristic of the driven plate can be altered from curve E D O A B C to curve H G O F by altering only resilient elements 21 and the end caps 27, together with deletion of spring 25, as will be explained with reference to figures 4, 5 and 6.

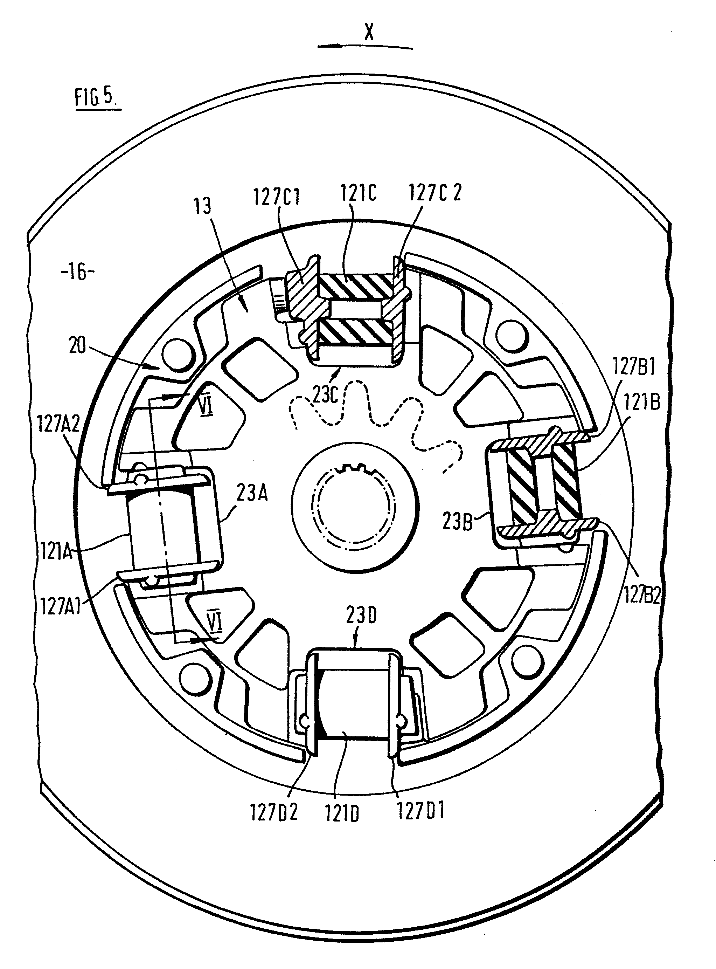

Figures 5 and 6 illustrate a driven plate having the same adaptor plate 20 and retainer plate 19 as in figure 1 and the same hub flange 13. The resilient elements 121 are located in the same hub flange apertures 23A, B, C and D as before, but differ in length from corresponding elements 21 in the corresponding apertures. The resilient elements are each held in their respective apertures by end caps 127 in the same way as previously described but by varying the circumferential 'thickness' of the end caps the resilient elements are brought into operation at different desired angles of deflection.

Figure 5 shows that resilient element 121C is slightly longer than corresponding element 21C from figure 1 and that the end cap 127C1 has been extended to take up all the clearance occupied by auxiliar, spring 25 in figure 1. End cap 127C2 remains identical with end cap 27C2. Resilient element 121D is longer than resilient element 21D whereas end caps 127D1 and 127D2 are identical with corresponding end caps 27D1 and 27D2.

Resilient elements 121A and 121B are longer than the corresponding elements 21A and 21B. End caps 127A2 and 127B2 correspond to end caps 27A2 and 27B2. End caps 127A1 and 127B1 are arranged to abut with the adaptor and retainer plates 19 and 20 in exactly the same way as with end caps 27A1 and 27B1. However, the abutment surfaces for the hub flange are effectively repositioned in figure 5 by altering the shape of the end caps so that without any deflection, end caps 127A1 and 127B1 have a free play PA (best seen in figure 6) before engagement with the hub flange.

The load deflection characteristic for the driven plate of figures 5 and 6 is also shown in figure 4 as characteristic H G O F.  During drive conditions, all four resilient buffers come into operation immediately there is any deflection so the characteristic is curve O F.  This is non-linear due to the characteristics of the resilient elements but is without any discontinuities. In the overdrive condition, there is a small angular deflection between point O and point G, over which only the long and hence flexible resilient elements 121C and 121D are operative, giving a shallower slope than from O to D in the case of the other driven plate.  At point G, the clearance PA has been taken up and all four resilient elements contribute to the control of the continued deflection.  The characteristic is then as indicated between points G and H at which stage no further deflection is possible.

Two clutch driven plates having widely different load/deflection characteristics have been described and both these clutches are identical apart from the nature and dimensions of the resilient buffers interposed between the hub flange and the friction facing carrier.  By introducing other variations to these buffers, driven plates with other load/deflection characteristics can be constructed using the same hub flange and friction facing carrier.  The factors which can be varied are the length and cross-sectional area of the resilient elements, the 'thickness' or effective length of the end caps and the relationship between the end cap abutment faces on the friction facing carrier and on the hub flange.

It is common practice in the motor industry for vehicle manufacturers to use a common basic type of engine and gearbox for several versions of the same basic vehicle and for more than one basic vehicle. Often the clutch to be interposed between the engine and gearbox is of the same diameter for a range of variations but requires different load/deflection characteristics depending on the details of the vehicle. In such a situation, it is particularly desirable in the interests of simplified mass-production to have as many common components as possible within the clutch driven plate. In the past, it has been common practice to use coil springs of differing characteristics from one clutch driven plate to another whilst retaining the same design for other components of the driven plate. This allows some variation in the slope of various sections of the load/deflection characteristic but does not allow for variation in the position on the characteristic of points of discontinuity such as the points A, B, D and G. The conventional way to vary the positions of or to eliminate such discontinuity is to employ a friction facing carrier or hub flange with modified dimensions to its apertures. The cost in a production facility of having to provide tooling and stocks for a range of these major components is very substantial. The corresponding costs associated with stocking a range of small plastic mouldings and providing tooling for these mouldings is very much less.

CLAIMS

1.        A range of friction clutch driven plates
(figure 1, figure 4), each driven plate of the range
having a hub (11) with a flange (13) thereon, a friction
facing carrier (19, 20) mounted on the hub and capable
of angular deflection with respect to the hub about the
hub axis and resilient buffers (27, 21, 27) located in
apertures (23, 22) in the flange and carrier to control
said deflection and thereby provide a controlled torque/
deflection characteristic between the hub and carrier,
each buffer comprising a resilient element (21) and two
end caps (27), the dimensions and relative positions of
the apertures being identical from one clutch to another,
characterised in that the torque/deflection characteristic
is varied from one clutch to another in the range by
provision of at least one buffer in each clutch which has
an end cap (27A1 – figure 1) which differs from the corresponding end cap (127A1 – figure 4) in another clutch of
the range.

2.        A range of friction clutch driven plates
according to claim 1 characterised in that at least one
buffer in one clutch has a resilient element (21A –
figure 1) which differs from the corresponding resilient
element (121A – figure 4) in another clutch.

3.        A range of friction clutches as claimed in
claim 1 characterised in that the length (circumferentially
of the driven plate) of an end cap (27A1 – figure 1) in
one clutch differs from the length of a corresponding end
cap (127A1 – figure 4) in another clutch such that the
corresponding buffers come into action after different
ranges of angular deflection.

4.          A range of friction clutches as claimed in claim 3 wherein one of said buffers in one driven plate (121A - figure 4) comes into play immediately upon any deflection and the corresponding buffer (21A - figure 1) in another driven plate comes into play after a discrete range of movement.

5.          A friction clutch driven plate having a hub (11) with a flange (13) thereon, a friction facing carrier (19, 20) mounted on the hub and capable of angular deflection about the hub, and resilient elements (21) located in apertures (22, 23) in the flange and carrier to resist said deflection, said elements each having end caps (27), one at each end thereof and being held snugly in the apertures in one of the flange and carrier and at least two of said elements (21A and 21B) having circumferential play (PB) in the apertures in the other of the flange and carrier, wherein end caps have different thicknesses (27A1 different from 27D1) whereby the operating characteristics of resilient elements within apertures vary from one to another due to different thickness end caps to vary the circumferential play in a respective aperture.

6.          A driven plate according to claim 5, characterised in that the resilient elements are a snug fit in the facing carrier apertures (19, 20) and have circumferential play (PB) in at least two of the hub flange apertures.

7.          A method of altering the load deflection characteristics of a friction clutch driven plate having a hub (11) with a flange (13) thereon, a friction facing carrier (19, 20) mounted on the hub and capable of rotational deflection about the hub, and resilient elements (21) located in apertures (22, 23) in the flange and carrier to resist said rotation, said members each having end caps (27) located one at each end thereof and being held snugly in the apertures of one of the flange and carrier, and at least two of said elements having circumferential play in their respective apertures in the other of the flange and carrier, said method comprising the varying of the said circumferential play by the use of end caps (27A1 - figure 1 and 127A1 - figure 2) of differing circumferential lengths.

0096471

FIG.1.

FIG. 2.

FIG. 3.

FIG. 6.

FIG. 4.

X

FIG 5.

## EUROPEAN SEARCH REPORT

European Patent Office

EP  83 30 2648

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 509 292  (GOETZE) <br> * Page 2, left-hand column, lines 11-30; page 3, lines 3-5; figures * <br> --- | 1,2 | F 16 D   13/68 |
| A | FR-A-1 511 698  (S.A.G.A.) <br> * Page 2, lines 13-17; figure 3 * <br> --- | 1 | |
| P,A | EP-A-0 070 099  (AUTOMOTIVE) <br> * Whole document * <br> --- | 1,6 | |
| A | US-A-2 964 930  (AIRA) <br><br> --- | | |
| A | US-A-4 093 054  (JOHNS) <br><br> --- | | |
| A | US-A-4 156 481  (ISHIDA) <br><br> --- | | **TECHNICAL FIELDS SEARCHED (Int. Cl. ³)** <br> F 16 D <br> F 16 F |
| A | FR-A-1 213 399  (SAURER) <br><br> --- | | |
| A | FR-A-1 396 803  (BORG-WARNER) <br><br> --- | | |
| A | FR-A-2 346 599  (AUTOMOTIVE) <br><br> ----- | | |

The present search report has been drawn up for all claims

| Place of search | Date of completion of the search | Examiner |
|---|---|---|
| THE HAGUE | 06-09-1983 | ORTHLIEB CH.E. |